# EUROPÄISCHE PATENTSCHRIFT

(11) **EP 3 697 193 B1**
(45) Veröffentlichungstag und Bekanntmachung des Hinweises auf die Patenterteilung: **26.02.2025**
(21) Anmeldenummer: 18799675.6
(22) Anmeldetag: 16.10.2018
(51) Int. Cl.: A01D 17/10, B65G 15/52, B65G 17/06

(54) **SIEBBANDEINHEIT FÜR EINE ERNTEMASCHINE SOWIE ZUGEHÖRIGE KLAPPENEINHEIT**
SCREEN BELT UNIT FOR A HARVESTING MACHINE AND ASSOCIATED SHUTTER UNIT
UNITÉ DE BANDE FILTRANTE POUR UNE RÉCOLTEUSE AINSI QU'UNE UNITÉ OUVRANTE ASSOCIÉE

(30) Priorität: 17.10.2017 DE 102017124170
(43) Veröffentlichungstag der Anmeldung: 26.08.2020
(73) Patentinhaber: Grimme Landmaschinenfabrik GmbH & Co. KG, 49401 Damme (DE)
(72) Erfinder: ROSS, Julian, 59889 Eslohe (DE); GERDES, Josef, 49624 Löningen (DE); HÖNEMANN, Heinrich, 49076 Osnabrück (DE); HALBRÜGGE, Christoph, 49134 Wallenhorst (DE)
(74) Vertreter: Wischmeyer, André
(86) Internationale Anmeldenummer: PCT/EP2018/078301
(87) Internationale Veröffentlichungsnummer: WO 2019/076932

(56) Entgegenhaltungen:
- EP-A1- 0 133 886
- EP-A1- 0 312 629
- EP-A1- 2 813 134
- EP-A1- 2 813 135
- EP-B1- 0 133 886
- DE-A1- 2 520 605
- DE-C- 3 234
- JP-A- S4 839 210

## Beschreibung

Die vorliegende Erfindung betrifft eine Siebbandeinheit für eine Erntemaschine, insbesondere für einen Hackfruchternter, zum Absieben von Beimengen eines Gemisches umfassend Erntegut und Beimengen insbesondere in Form von Boden, Kluten und Steinen, wobei die Siebbandeinheit ein Siebband umfasst, welches wenigstens zwei vorzugsweise als Trägerriemen oder -ketten ausgebildete Endlosträger aufweist, zwischen denen in Richtung quer zur Förderrichtung Siebstäbe angeordnet sind, die eine Mehrzahl von insbesondere jeweils zumindest zwei Siebstäbe umfassende Siebstabeinheiten ausbilden, wobei zumindest ein Teil der Siebstäbe relativ zu den Endlosträgern beweglich festgelegt ist.

Beim Ernten und Transportieren von Hackfrüchten, insbesondere von Kartoffeln durch ein gattungsgemäßes Siebband sollen einerseits ungewünschte Beimengen in Form von Erde entweder zum Schutz des Ernteguts gezielt mitgeführt und darüber hinaus jedoch ebenso gezielt aus dem Erntegut-Beimengen-Gemisch entfernt werden. Gleichzeitig soll verhindert werden, dass je nach Größe des zu siebenden bzw. zu transportierenden Ernteguts zu kleine Fraktionen von Erntegut durch das Siebband hindurchfallen oder beim Transport gequetscht werden.

In der DE 27 15 108 wurde hierzu vorgeschlagen, die Siebbandteilung dergestalt zu variieren, dass nachträglich an den vorhandenen Siebbändern anzubringende Zusatzquerstäbe zu montieren sind, die zu einer Variation der Siebbandteilung führen.

Die Zusatzquerstäbe sind einzeln zu montieren, was mit einem entsprechenden Aufwand einhergeht.

Aus der DE 3234 C ist es bekannt, Siebstäbe unterschiedlich schräg zum Siebband anzustellen.

Des Weiteren ist aus der EP 133 886 A1 eine Regelvorrichtung für eine Erntebergungsvorrichtung bekannt, die bei einer Lageveränderung der Bandaufsammeleinrichtung sofort eine Korrektur der Lage der Bandaufsammeleinrichtung eingeleitet werden kann, um diese wieder in ihre ursprünglich eingestellte Lage zurück zu verstellen, so dass eine optimale Erntebergung möglich ist.

Des Weiteren sind aus dem Stand der Technik Fallklappen bekannt, die als Zusatzbauteile mit in einem Siebband integriert sind. Die Fallklappen sind in der Siebzone im Obertrum geschlossen und öffnen sich schwerkraftbedingt im Untertrum. Hierdurch entstehen im Untertrum größere Ausnehmungen, die die Selbstreinigung des Siebbandes aufgrund von aus dem Obertrum nach unten fallenden Beimengen verbessern. Die Fallklappe ist im Lasttrum geschlossen und öffnet sich schwerkraftbedingt erst im Leertrum. Für eine Änderung der Siebbandteilung, d.h. des effektiven Abstands der Siebstäbe des Siebbandes, muss dieses demontiert und ausgetauscht werden. Der hiermit einhergehende Zeitaufwand während eines Erntebetriebs bei häufig vergleichsweise engen Zeitfenstern ist nachteilig.

Die JP S48-39210 offenbart ein Positioniermittel, über welches in einem Teil des Obertrums auffallende Klappeneinheiten in einem ersten Teil des Obertrums hieran gehindert werden. Die JP S44-17154 offenbart Klappeneinheiten, die fest an einem Siebstab montiert sind.

Es ist Aufgabe der vorliegenden Erfindung, den für eine Änderung der Siebbandteilung notwendigen Aufwand zu minimieren.

Die Aufgabe wird gelöst durch einen Gegenstand gemäß Anspruch 1 sowie durch einen Gegenstand gemäß Anspruch 15. Vorteilhafte Ausgestaltungen der Erfindung sind den auf diese Ansprüche rückbezogenen Unteransprüchen sowie der nachfolgenden Beschreibung zu entnehmen.

Erfindungsgemäß ist vorgesehen, dass die Siebbandeinheit ein wenigstens abschnittsweise längs des Siebbandes angeordnetes und auf die beweglichen Siebstäbe einwirkendes Positioniermittel aufweist, über das in der Siebzone in Siebrichtung betrachtet ein Abstand in Förderrichtung nachfolgender Siebstäbe definiert und insbesondere variabel einstellbar ist. Das Positioniermittel wirkt entweder direkt oder indirekt auf die beweglichen Sieb- oder Querstäbe. Es führt zu einer Relativlage der beweglichen Siebstäbe zu den Endlosträgern dergestalt, dass in Siebrichtung betrachtet die Abstände der Siebstäbe (eines beweglich angeordneten und eines insbesondere nachfolgenden festen Siebstabes) durch eine geänderte Position des Positioniermittels variiert werden.

Durch die Anordnung des nicht als Teil des Siebbands geltenden Positioniermittels und dessen Einwirkung auf die beweglichen Siebstäbe kann der Abstand der einander nachfolgenden Siebstäbe auch im Verlauf ein und derselben Siebzone variiert werden. Beispielsweise kann hierfür das Positionierelement in Siebrichtung betrachtet die beweglichen Siebstäbe in einem über den Verlauf der Siebzone variierenden, insbesondere zu- und/oder abnehmenden Abstand halten bzw. führen. Im Verlauf einer Siebzone wird so mit zunehmender Förderstrecke die Trennung der Beimengen vom Erntegut gezielt vorgenommen. Die Änderung des Abstands in Förderrichtung nachfolgender Siebstäbe geht vorzugsweise gleichzeitig einher mit der Änderung des Abstands senkrecht zur Förderrichtung, was zur vorteilhaften Ausbildung von Taschen des Siebbandes führt.

Durch die erfindungsgemäße Ausbildung einer Siebbandeinheit mit Siebstabeinheiten, die vorzugsweise jeweils einen oder mehrere beweglich festgelegte Siebstäbe aufweisen, kann auf den Austausch der Siebbänder zum Zweck der Änderung der Siebbandteilung verzichtet werden. Ebenfalls entfällt das aus dem Stand der Technik bekannte Anbringen zusätzlicher Sieb- bzw. Querstäbe. Die Sieb- oder Querstäbe der erfindungsgemäßen Vorrichtung umfassen sowohl Stäbe, die senkrecht zwischen den zwei Endlosträgern verlaufen wie auch solche, die geringfügig schräg angewinkelt sein können sowie insbesondere auch abgekröpfte Siebstäbe.

Darüber hinaus versteht es sich, dass die Endlosträger auf herkömmliche Weise zu Wartungs- und Reparatur- oder auch Austauschzwecken aufgrund des Verschleißes derselben über bekannte Verbindungsmittel geöffnet werden können. Hierfür können die Endlosträger Schlösser oder andere den Endlosträger öffnende Verbindungsbereiche aufweisen.

Vorteilhafterweise ist zumindest ein Teil der Siebstabeinheit durch das Positioniermittel lageveränderbar zum Endlosträger ausgebildet. Die Siebstabeinheit weist hierbei insbesondere den relativ zu den Endlosträgern beweglich festgelegten Siebstab auf. Entsprechend ist ein Teil der Siebstabeinheit dann lageveränderbar zum Endlosträger ausgebildet. Vorzugsweise handelt es sich bei dem lageveränderbar zum Endlosträger positionierbaren Teil der Siebstabeinheit um einen noch nachbeschriebenen Klappenteil, der um zumindest einen relativ zum Endlosträger oder an diesem ortsfest angeordneten Teil der Siebstabeinheit verschwenkt oder verdreht werden kann. Insbesondere ist der verschwenk- oder verdrehbare Teil der Siebstabeinheit und somit der bewegliche Teil derselben dem nicht verschwenkbaren Teil der Siebstabeinheit in Fahrtrichtung nachgeordnet an dem Positionierelement gelagert, was für eine Zugbewegung vorteilhaft ist, da weniger Blockaden der schwenkbaren Teile im Kontakt mit dem Positioniermittel auftreten können. Für einen gleichwohl optional möglichen und insbesondere kurzfristigen Reversierbetrieb des Siebbandes zwecks Auflösung etwaiger Blockaden kann der verschwenk- oder verdrehbare Teil dann auch vorlaufend gelagert sein.

Gemäß einer weiteren Ausführungsform der Erfindung kann die Siebstabeinheit einen im Querschnitt exzentrisch gelagerten Siebstab aufweisen. Hierbei kann es sich um einen ovalen Stab oder um einen runden, jedoch mit einer exzentrisch innerhalb seiner Außenoberfläche gelagerten Drehachse versehenen Stab handeln. Bei der Verwendung dieser runden Stäbe wird zur Variation des Abstandes einander nachfolgender Stäbe nicht jeder sondern beispielsweise nur jeder zweite Stab verstellt. Bevorzugt handelt es sich jedoch um einen um eine Schwenkachse dreh- oder schwenkbarer gelagerten Siebstab, der über ein Gelenk sowie etwaig zugehörige Abstandsmittel von einer Dreh- oder Schwenkachse beabstandet ist. Es können somit bereits bekannte Siebstäbe erfindungsgemäß verwendet werden.

Erfindungsgemäß ist die Siebstabeinheit mit wenigstens einer Klappeneinheit versehen, die zumindest einen der zwei Siebstäbe aufweist, wobei die Klappeneinheit über wenigstens ein mit dem Endlosträger verbundenes Gelenk schwenk- oder drehbar ist und das Positioniermittel zur Beeinflussung einer Winkellage der Klappeneinheit ausgebildet ist. Die Klappeneinheit weist somit den zu verschwenkenden Siebstab auf. Die Winkellage ergibt sich über einen Winkel zwischen der Förderrichtung und einer von der Dreh- oder Schwenkachse in radialer Richtung ausgehenden Längserstreckung der Klappeneinheit. Beispielsweise ist diese Längserstreckung bei einer Siebstabeinheit mit einem am Endlosträger befestigten Siebstab und einem schwenkbeweglich oder drehbeweglich hierzu angeordneten Siebstab definiert durch eine durch beide Längsmittelachsen der Siebstäbe hindurchlaufende und senkrecht zu denselben Siebstäben verlaufende, gradlinige Strecke, die gegenüber der Förderrichtung F angewinkelt ist.

Erfindungsgemäße Klappeneinheiten können in Förderrichtung des Siebbandes nacheinander bzw. hintereinander angeordnet sein, so dass das Positioniermittel, welches wenigstens abschnittsweise längs des Siebbandes und insbesondere in der Siebzone angeordnet ist, gleichzeitig eine Mehrzahl von Klappeneinheiten hinsichtlich deren Winkellager beeinflusst. Durch unterschiedliche Winkellagen aufgrund unterschiedlicher Positionen des Positioniermittels ergibt sich in der Siebrichtung betrachtet ein jeweils unterschiedlicher Abstand einerseits zwischen den fest beabstandeten Siebstäben einer Siebstabeinheit und andererseits zwischen den Siebstäben einer ersten vorgeordneten und einer nachgeordneten Siebstabeinheit ergeben.

Die Siebrichtung ist hierbei die Richtung der Schwerkraft, die auf die Beimengen dergestalt wirkt, dass diese zwischen den von den Siebstäben ausgebildeten Zwischenräumen unter der Voraussetzung der passenden Abmessung hindurchfallen können.

Das Positioniermittel ist gemäß einer erfindungsgemäßen Weiterbildung dergestalt ausgebildet, dass es die insbesondere schwerkraftbedingte Verschwenkung oder Drehung der Klappeneinheiten begrenzt. Es liegt somit unterhalb der beweglichen Teile einer Siebstabeinheit bzw. der Klappeneinheit und bildet für diese ein Auflager bzw. einer Auflagerfläche aus. So kann durch ein Aufliegen der beweglichen Teile einer Siebstabeinheit eine Winkellage definiert werden, die mit einer bestimmten Siebbandteilung einhergeht. Bei einer ausreichend großen Beabstandung des Positioniermittels von der Siebstabeinheit dergestalt, dass diese nicht mehr in Kontakt mit dem Positioniermittel steht, ist die Siebstabeinheit schwerkraftbedingt dann ausgerichtet. In dieser Position wäre der Abstand in Förderrichtung nachfolgender, d.h. nacheinander folgender, Siebstäbe die Teilung zumindest in Fall einer horizontal zum Untergrund verlaufenden Siebzone (und unter Nichtberücksichtigung etwaiger Asymmetrien in der Gewichtsverteilung einer Klappeneinheit) maximal. Im Falle einer maximal dicht entlang des Endlosträgers verlaufenden Anordnung des Positioniermittels kann die Siebeinheit nur geringfügig oder gar nicht verschwenken und weist eine horizontale oder nahezu horizontal und parallel zur Förderrichtung F verlaufende Ausrichtung auf. Die Siebstababstände sind dann minimiert.

Vorteilhafterweise weist das Positioniermittel in der Siebzone wenigstens eine Führungsfläche zur Anlage der Klappeneinheiten auf. Eine solche Führungsfläche, die entsprechend der Anordnung des Positioniermittels entlang des Siebbandes verläuft, bietet eine konstruktiv vergleichsweise einfache Möglichkeit, eine Vielzahl von Siebstabeinheiten gleichzeitig zu beeinflussen. Durch Annäherung und Entfernung einer solchen Führungsfläche und damit des Positioniermittels von dem Siebband wird den schwenk- oder drehbaren Klappeneinheiten ein Bewegungsspielraum vorgegeben, der zur Bestimmung des Anstellwinkels der Klappeneinheiten und damit der Siebbandteilung führt. Vorteilhafterweise ist die Führungsfläche senkrecht zur Förderrichtung betrachtet neben und insbesondere zumindest teilweise zwischen den Endlosträgern angeordnet. Es können dann herkömmliche Siebbänder ohne Änderung der Bauraumbreite für das Siebband verwendet werden, wobei lediglich innenseitig in den oftmals vorhandenen Lufträumen des Siebbandrahmens das Positioniermittel entlang der Siebzone angeordnet und maschinenrahmenseitig oder siebbandrahmenseitig vorzugsweise variabel positionierbar festgelegt wird oder ist. Auf diese Weise lassen sich somit bereits existierende Erntemaschinen mit der erfindungsgemäßen Siebbandeinheit nachrüsten.

In einer weiteren vorteilhaften Weiterbildung der Siebbandeinheit ist die Führungsfläche in Förderrichtung betrachtet zu einem Untergrund angewinkelt, bevorzugt in einem Winkel γ zwischen 10° und 60°, und insbesondere zur Mitte der Siebbandeinheit hin abfallend ausgebildet. Hierdurch können sich auf der Führungsfläche weniger ungewünschte Beimengen in Form von Erde oder Kluten ablagern. Insbesondere befinden sich auf einer Höhe des Siebbandes auf beiden Seiten längs einer Mitte der Siebbandeinheit zu dieser Mitte hin abfallende Führungsflächen, so dass eine Zentrierung der geführten Siebstabeinheiten erfolgt und sich gleichzeitig möglichst wenig Beimengen auf den Führungsflächen ablagern. Vorzugsweise sind die jeweiligen Klappeneinheiten mit entsprechend angepassten und komplementär schräg gestellten Anlagebereichen bzw. Flächen zur Anlage an den jeweiligen Führungsflächen versehen.

Vorzugsweise kann die Führungsfläche zur Erzeugung eines punktuell variierenden Abstands, d. h. einer punktuell variierenden Siebbandteilung mit einer Profilierung versehen sein, die zu beispielsweise kurze Impulse zur Unterstützung von Reinigungszwecken abschnittsweise oder auf der gesamten Führungsfläche des Positionierelements vorhanden sein kann. Durch eine Profilierung kann im Betrieb der Abstand der Siebstäbe bzw. die Winkellage der Klappeneinheiten beeinflusst werden, was wiederum zu einem kurzfristigen, impulsartigen Anheben oder einem Absenken des transportierten Gemisches führt. Durch eine solcherart induzierte Rüttelbewegung kann auf einfache Weise eine Reinigungswirkung unterstützt werden.

Es versteht sich, dass die Siebstäbe insbesondere -jedoch nicht nur- zum Schutz des Ernteguts mit einem Kunststoffüberzug versehen sein können, der dämpfende Eigenschaften aufweist. Auch können mehrere Siebstäbe einer Klappen- oder Siebstabeinheit mit ein- und demselben Umhüllung versehen sein, so dass die Abstände der Siebstäbe einer Siebstabeinheit auf null reduziert werden.

Insbesondere ist die Führungsfläche Teil einer zumindest teilweise als Verschleißteil ausgebildeten Führungsschiene. Ein beispielsweise als Führungsschiene am Maschinenrahmen befestigter Teil der Siebbandeinheit weist somit insbesondere einen austauschbaren Teil in Form eine oder mehrerer Gleitschienen auf. Dieser ist über entsprechend lösbare Befestigungsmittel an der weiteren Siebbandeinheit oder am Maschinenrahmen oder eben an der weiteren Führungsschiene befestigt. Insbesondere ist die Führungsschiene mit einer Kunststoffschicht, beispielsweise aus Polyurethan, versehen oder sogar komplett aus Kunststoff ausgebildet.

Allgemein wird als Siebstab ein zwischen den Endlosträgern aufgespannter Stab beliebigen Querschnitts verstanden. Der Querschnitt kann rund, unrund und insbesondere auch flacher ausgebildet sein.

Zur variablen Einstellung bzw. zur Realisierung einer Einstellbarkeit auch während des laufenden Betriebs oder während kurzer Umrüstphasen ist dem Positioniermittel gemäß der erfindungsgemäßen Ausgestaltung zumindest ein Stellorgan zugeordnet, über das der Abstand zumindest eines die Klappeneinheit führenden Teils des Positioniermittels zum Endlosträger einstellbar ist. Insbesondere wird hiermit zumindest der Abstand der Führungsfläche zum Endlosträger variiert. Durch diesen Abstand ergibt sich dann die Winkellage der mit dem Endlosträger verbundenen Klappeneinheit, wobei das Positioniermittel an einem oder mehreren Teilen der Klappeneinheit insbesondere umfassend ein Gelenkteil und/oder einen Siebstab anliegen kann. Als Stellorgane kommen bevorzugt Gewindestangen für eine insbesondere manuelle oder über Schrittmotoren gesteuerte Verstellung infrage. Alternativ oder ergänzend können hydraulisch oder pneumatisch oder allgemein elektromotorisch betriebene Stellorgane verwendet werden. Diese sind insbesondere über eine zur Maschinensteuerung zugehörige und insbesondere in diese integrierte Steuer- oder Steuer- und Auswertevorrichtung betätigbar.

Durch ein oder mehrere Stellorgane, die insbesondere nur auf kurze Abschnitte des Siebbandes, zumindest auf eine Siebstabeinheit, einwirkende Positioniermittel betätigen, kann mittels einer zugehörigen Steuer- oder Steuer- und Auswertevorrichtung ein das Absieben unterstützendes Klopfen erzeugt werden.

Vorzugsweise ist in Förderrichtung betrachtet sowohl am linken wie auch am rechten Ende der jeweiligen Siebstabeinheiten ein Positioniermittel angeordnet, sodass eine gleichmäßige Führung der beweglichen Siebstäbe realisiert ist. Ungeachtet einer gegebenenfalls rahmenseitig vorhandenen teilweise einstückigen Verbindung des Positioniermittels mit einer Führung der jeweiligen Endlosträger ist ein eine Führung der Siebstabeinheiten bewirkender Teil des Positioniermittels beabstandet von dem Endlosträger angeordnet.

Das Positioniermittel kann entlang der Siebzone vorteilhafterweise mehrteilig ausgebildet sein, sodass eine möglichst hohe Variabilität in der Beabstandung insbesondere der Führungsfläche von dem Endlosträger vorhanden ist. Die Führungsfläche kann dann ebenfalls mehrteilig ausgebildet sein und Änderungen in der Steigung des Siebbandes nachvollziehen.

Beispielsweise kann weiterhin eine mit Klappeneinheiten versehene, erfindungsgemäße Siebbandeinheit in einem ansteigenden Bereich des Siebbandes durch Einstellung einer bestimmten Winkellage der Klappeneinheiten zur Ausbildung von Fördertaschen im Siebband verwendet werden, während bei eher horizontal verlaufenden Förderabschnitten der Schwerpunkt auf die Siebfunktion gelegt werden kann. Hierfür können im eine Siebfunktion im Vordergrund aufweisenden Siebbandbereich andere und insbesondere auch variierende Abstände der Führungsfläche zum Endlosträger und damit einhergehende unterschiedliche Winkellagen der Klappeneinheiten und Siebstababstände eingestellt sein. Eine erfindungsgemäße Siebbandeinheit kann somit verschiedene Schwerpunktfunktionen im Verlauf ihrer Siebzone im Obertrum aufweisen.

Insofern weist die erfindungsgemäße Siebbandeinheit bei einem mehrteiligen Positioniermittel dann auch insbesondere mehrere Stellmittel auf. Während die erfindungsgemäßen Siebstabeinheiten beispielsweise über Langlöcher bewirkte geringfügige Änderung der Abstände der Siebstäbe zueinander aufweisen können, ist es zur Vermeidung von nicht gewünschten Positionen und zur Definition genauer Abstände vorteilhaft, wenn die Siebstäbe einer Siebstabeinheit einen bis auf etwaig vorhandenes Lagerspiel festen Abstand zueinander aufweisen.

Gemäß einer weiteren vorteilhaften Ausbildung der Erfindung ist ein Siebstab einer jeweiligen Siebstabeinheit an den Endlosträgern festgelegt und bildet einen Teil von zwei Gelenken zur Anbindung der Klappeneinheit aus. Durch die Festlegung des Siebstabs kann über einfache Weise ein Schwenk- oder Drehgelenk ausgebildet werden, welches über die schwenk- bzw. drehbaren Gelenkteile einen parallel zu dem festgelegten Siebstab angeordneten beweglichen Siebstab ermöglicht. Sinnvollerweise weist die Siebstabeinheit zu beiden aussenseitigen Endlosträgern hin ein Dreh- bzw. Schwenkgelenk auf. Der am Endlosträger festgelegte Siebstab bildet dann die Drehachse der Klappeneinheit aus. Alternativ können beispielsweise zwei schwenkbar die Klappeneinheit ausbildende Siebstäbe aneinander und über eine abgekröpfte und keinen Siebstab ausbildende Verbindung in einem Schwenklager oder Drehlager der jeweiligen Endlosträger gelagert sein.

Insbesondere ist die Führungsfläche Teil einer Führungsschiene, die als konstruktiv relativ einfaches Bauteil im Wege eines Einbaus einer erfindungsgemäßen Siebbandeinheit in eine Erntemaschine an einen Rahmen des Siebbandes oder einen Maschinenrahmen montiert und insbesondere nachträglich angebaut werden kann.

Um einen Verschleiß zwischen dem verschwenkbaren Siebstabeinheitenteil und der Führungsfläche zu minimieren, kann das Positioniermittel auch zumindest teilweise mitlaufend ausgebildet sein. In einem solchen konstruktiv aufwändigeren Fall würde die Umlaufgeschwindigkeit des Positioniermittels, welches beispielsweise auch bandförmig ausgebildet sein kann, auf die Umlaufgeschwindigkeit des Siebbandes abgestellt sein. Das Positioniermittel würde dann ebenfalls wieder über entsprechende Positioniermittel variabel im Abstand zum Siebband ausgebildet sein.

Vorzugsweise sind wenigstens 25 % der Siebstäbe relativ zum Endlosträger lageveränderbar ausgebildet, so dass ein Siebband über große Teile seiner Gesamtlänge eine variierbare Siebteilung aufweist. Bevorzugter ist eine erfindungsgemäße Siebbandeinheit weiterhin mit einem Siebband versehen, welches zumindest zu 50 % mit lageveränderbar zum Endlosträger ausgebildeten Siebstäben versehen ist. So kann beispielsweise jeder zweite Siebstab feststehend ausgebildet sein, während an jedem feststehenden Siebstab eine Klappeneinheit mit einem in festem Abstand, jedoch schwenkbar um den feststehenden Siebstab herum bewegbaren Siebstab angeordnet ist. Erfindungsgemäße Ausbildungen der Siebbandeinheit können bevorzugt bis zu 3 von 4, d. h. 75 % der Siebstäbe lageveränderlich gestalten, sodass vorteilhafte Ausgestaltungen der Klappeneinheit mit zwei um einen feststehenden Siebstab verschwenkbaren Siebstäben oder mit drei verschwenkbaren Siebstäben verwendet werden können.

Die bevorzugten Ausführungsformen der Erfindung sind mit Klappeneinheiten versehen, die zumindest in einem gewissen Rahmen frei schwenk- oder drehbar um eine gegenüber den Endlosträgern ortsfeste Drehachse und insbesondere die feststehenden Siebstäbe sind. Zur Vermeidung eines ungewünschten Umklappens der zwischen feststehenden Siebstäben frei durchschwenkbaren Klappeneinheiten im Bereich von Umlenkungen zu vermeiden, können gerade in diesen Bereichen ein oder mehrere Führungseinheiten vorgesehen werden, die zusätzlich zu dem Positioniermittel und insbesondere in einer Querrichtung betrachtet außerhalb des vom Endlosträger begrenzten Bereiches angeordnet sind. Vorzugsweise handelt es sich hierbei um bereits bekannte Krauteinzugsrollen, die im relevanten in Fahrtrichtung vorne liegenden Bereich etwaige fliehkraftbedingt verschwenkende Klappeneinheiten am ungewünschten Umklappen hindern.

Bevorzugt sind eine Führungsfläche des Positioniermittels und eine zur Anlage an diesem vorgesehene Außenoberfläche einer Klappeneinheit parallel ausgebildet, um eine gute Führung und eine Reinigungswirkung auf im Betrieb durch Beimengen verschmutzende Bereiche des Positioniermittels zu bewirken.

Eine beispielhafte Klappeneinheit umfasst einen Siebstab und weist wenigstens einen zur lösbaren Festlegung an einem weiteren Siebstab einer vor- oder nachbeschriebenen Siebbandeinheit ausgebildeten Gelenkteil auf, wobei das Gelenkteil oder der Siebstab der Klappeneinheit eine zur Anlage an einem Positioniermittel ausgebildete Außenoberfläche aufweist. Das Gelenkteil kann Teil eines Filmscharniers oder eines Drehgelenks sein. Während das Positioniermittel vorzugsweise eine mit einer Kunststoffbeschichtung versehene Außenoberfläche und Führungsfläche besitzt, kann die Klappeneinheit hierzu vorteilhafterweise eine in den verschiedenen Anlagepositionen parallel hierzu ausgebildete Oberfläche aufweisen, die einen möglichst gute Führung gewährleistet. Darüber hinaus sind die Breiten der Führungsfläche vorteilhafterweise auf die Breite der Anlageflächen der Klappeneinheit abgestimmt dergestalt, dass sie sich lediglich um wenige Zentimeter (< 10 Zentimeter) in der Breite unterscheiden. So kann sich auf den Führungsflächen eines Positioniermittels nur wenig Beimenge ablagern und die Führungsflächen werden durch die umlaufend anliegenden Außenoberflächen der Klappeneinheit im Obertrum im Betrieb gleichzeitig gereinigt werden.

Beispielhaft ist das Gelenkteil zumindest zweiteilig und zur Aufnahme des weiteren Siebstabs der Siebbandeinheit ausgebildet, so dass der Austausch einzelner beschädigter oder verschlissener Klappeneinheiten ohne weiteres möglich ist. Insbesondere ist das Gelenkteil dann Teil eines Drehgelenks. Vorzugsweise ist zur schwenkbaren Festlegung des Gelenkteils insbesondere an einem fest mit einem Endlosträger verbundenen Siebstab ein Schub- und/oder Rastelement vorgesehen, so dass die Befestigung und Demontage einer Klappeneinheit möglichst einfach und schnell erfolgt.

Die für eine Lagerung an einem Siebstab vorhandenen Gelenkteile sind vorzugsweise als Gelenkschalen ausgebildet und können entweder einstückig mit dem lageveränderlich positionierbaren Quer- bzw. Siebstab versehen sein oder entsprechende Aufnahmebereiche für herkömmliche Siebstäbe aufweisen.

Ein beispielhaftes Siebband weist wenigstens zwei vorzugsweise als Trägerriemen oder - Ketten ausgebildete Endlosträgerauf, zwischen den in Richtung quer zur Förderrichtung Siebstäbe angeordnet sind, wobei eine Mehrzahl der vor- oder nachbeschriebenen Klappeneinheiten vorhanden sind. Insbesondere ist ein solches Siebband, dem die vor- und nachbeschriebenen jeweiligen Vorteile ebenfalls zukommen, vollständig durch Siebstabeinheiten umfassend eine entsprechende Klappeneinheit ausgebildet.

Schließlich wird die Aufgabe ebenfalls noch gelöst durch eine Erntemaschine umfassend eine vor- oder nachbeschriebene Siebbandeinheit. Dieser Maschine kommen die vor- und nachbeschriebenen Vorteile der Siebbandeinheit zu. Es versteht sich, dass diese Erntemaschine die für einen Betrieb der erfindungsgemäßen Siebbandeinheit notwendigen Mittel wie z.B. Führungsrollen oder -scheiben, Antriebsmittel, Rahmen- oder andere tragende Teile besitzt. Insbesondere ist das Positioniermittel rahmenseitig festgelegt und kann über wenigstens ein entsprechend abgestütztes Stellorgan auf die beweglichen Siebstäbe einwirken.

Gemäß einer erfindungsgemäßen Weiterbildung weist die Erntemaschine einen Sensor zur Erkennung der Neigung des Bodens sowie eine zugehörige Auswerte- und Steuervorrichtung aufweist, wobei die Erntemaschine mit ihrer Auswertevorrichtung zur Steuerung des Positioniermittels in Abhängigkeit der Bodenneigung, insbesondere jeweils in Fahrtrichtung betrachtet, ausgebildet ist. Je stärker es zum Beispiel bergab geht, desto größere Taschen können durch die Einstellung des Positioniermittels durch die aufeinanderfolgenden Siebbandeinheiten ausgebildet werden.

Diese durch das nach unten Klappen insbesondere in den ansteigenden Bereichen eines Siebbandes entstehenden Taschen wirken dann einem schwerkraftbedingten Wegrollen des auf dem Siebband transportierten Ernteguts entgegen. Als Sensoren zur Erfassung der Bodenneigung können insbesondere Neigungssensoren zum Einsatz kommen. Die Bodenneigung kann ergänzend oder alternativ über ein oder mehrere andere Sensoren bestimmt werden, z.B. anhand eines GPS- oder dergleichen Positionssensors in Verbindung mit einer lokal in der Steuer- und Auswertevorrichtung oder extern auf einem Server hinterlegten Bodenkarte. Die Steuer- und Auswertevorrichtung umfasst übliche EDV-Mittel, die bei Erntemaschinen eingesetzt werden. Sie ist vorzugsweise in die Maschinensteuerung integriert.

Weitere Vorteile und Einzelheiten der Erfindung sind der nachfolgenden Figurenbeschreibung zu entnehmen. In den Abbildungen zeigt:
- Fig. 1:: einen erfindungsgemäßen Gegenstand in einer perspektivischen Darstellung,
- Fig. 2: eine teilweise Ansicht eines weiteren erfindungsgemäßen Gegenstands in einer Seitendarstellung,
- Fig. 3:: den Gegenstand nach Fig. 2 in einer weiteren Betriebsposition,
- Fig. 4:: den Gegenstand nach Fig. 2 in einer weiteren Betriebsposition,
- Fig. 5:: den Gegenstand nach Fig. 3 in einer ausschnittsweisen Darstellung,
- Fig. 6:: ein Detail einer erfindungsgemäßen Vorrichtung,
- Fig. 7:: ein weiteres Detail einer erfindungsgemäßen Vorrichtung,
- Fig. 8:: einen weiteren erfindungsgemäßen Gegenstand in einer gebrochenen leicht perspektivischen Darstellung,
- Fig. 9:: eine Detailansicht eines weiteren erfindungsgemäßen Gegenstands in einer Detailansicht,
- Fig. 10:: den Gegenstand nach Fig. 9 in einer weiteren Betriebsstellung,
- Fig. 11:: den Gegenstand nach Fig. 9 in einer weiteren Betriebsstellung,
- Fig. 12 a -c: Ansichten eines Teils eines weiteren erfindungsgemäßen Gegenstands,
- Fig. 13 a-c: Ansichten eines Teils eines weiteren erfindungsgemäßen Gegenstands,
- Fig. 14: einen Querschnitt durch ein weiteres, erfindungsgemäßes Ausführungsbeispiel.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

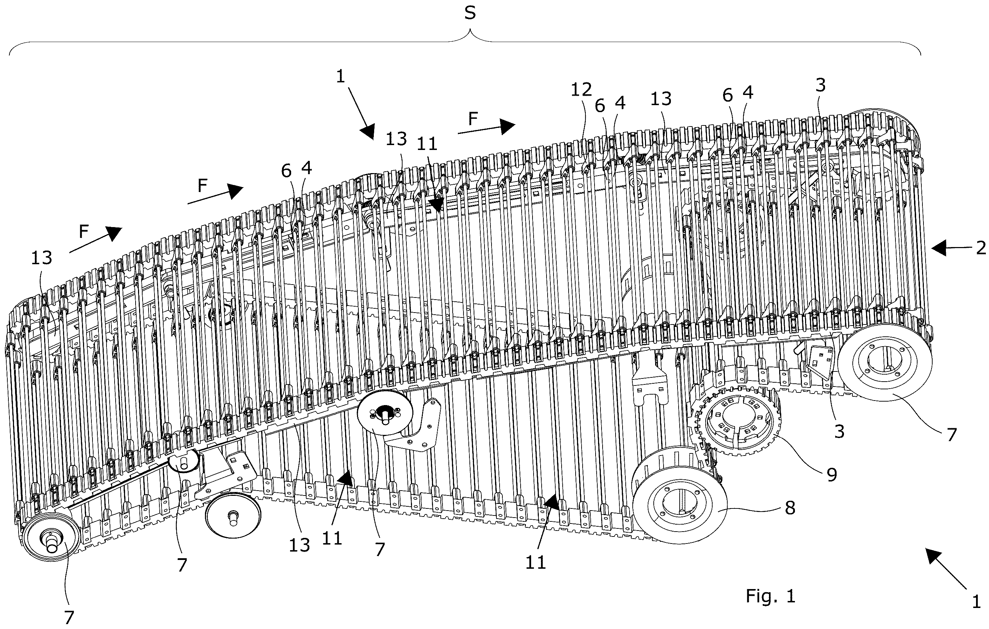

Eine erfindungsgemäße Siebbandeinheit 1 umfasst gemäß Fig. 1 ein Siebband 2, welches zum Absieben von Beimengen aus einem Gemisch von Erntegut und Beimengen vorgesehen ist. Das Siebband 2 weist zwei als Trägerriemen ausgebildete Endlosträger 3 auf, zwischen denen in Richtung quer zur Förderrichtung Siebstäbe 4 und 6 angeordnet sind. Die Förderrichtung F weist gegenüber einer nicht eingezeichneten Horizontalen über den Verlauf einer durch das Obertrum des Siebbandes 2 gebildeten Siebzone S unterschiedliche Steigungen auf. Diese Steigungen ergeben sich aufgrund der Positionierung von Umlenkrollen bzw. -scheiben 7, die teilweise als Antriebsscheiben ausgebildet sein können. Eine Spannrolle 8 spannt das Siebband 2 gegen eine Antriebsscheibe 9, sodass je nach eingestellter Steigung des Siebbandes in den einzelnen Siebbandzonen ein ausreichender Kontakt mit der Antriebsrolle 9 vorhanden ist.

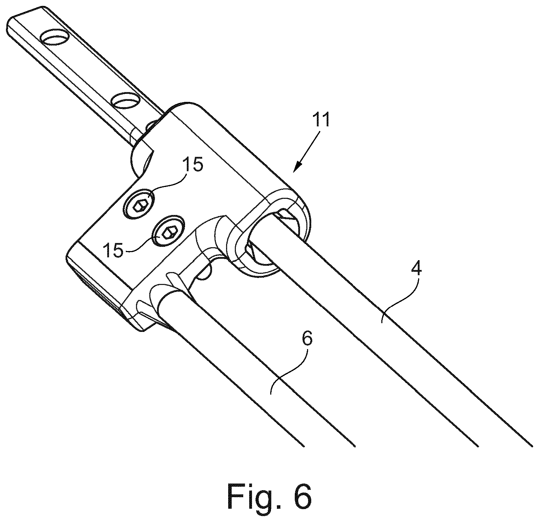

Einzelne, nachfolgend noch näher erläuterte Siebstäbe 4 und 6 bilden Siebstabeinheiten 11 (vgl. Fig. 6) aus, die einen am Siebband 2 festgelegten Siebstab 4 sowie einen gelenkig an diesen festgelegten Siebstab 6 inklusive eines zugehörigen Gelenkteils 12 aufweisen.

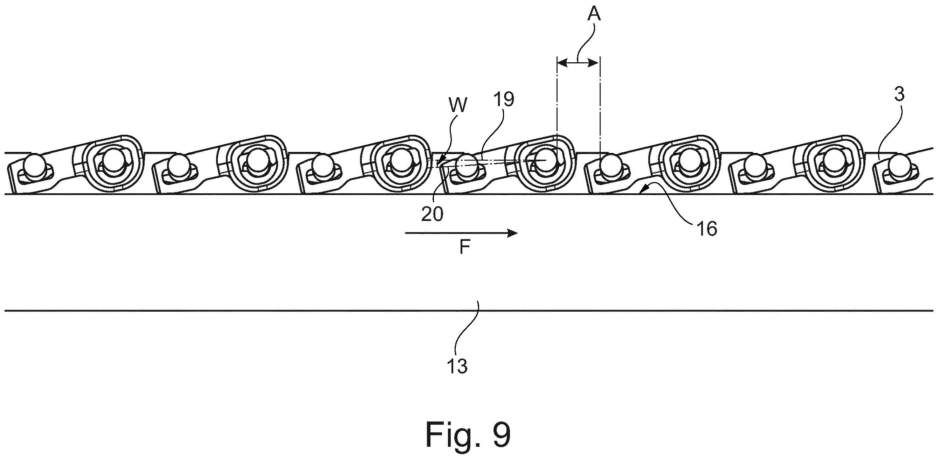

Die Siebstäbe 6 sind relativ zu den Endlosträgern 3 über die zwischen und durch die Siebstäbe 4 ausgebildeten Dreh- bzw. Schwenkgelenke relativ zu den Endlosträgern 3 beweglich festgelegt. Längs des Siebbandes 2 sind mehrere Positioniermittel 13 sowohl auf der in Förderrichtung linken als auch auf der in Förderrichtung rechten Seite angeordnet, die auf die beweglichen Siebstäbe 6 dergestalt einwirken, dass in der Siebzone ein in Siebrichtung R betrachteter Abstand A (vgl. Fig. 9 bis 11) definiert und durch Stellorgane variabel einstellbar ist. Insbesondere kann der Abstand A über die Siebzonenlänge in Förderrichtung F variieren.

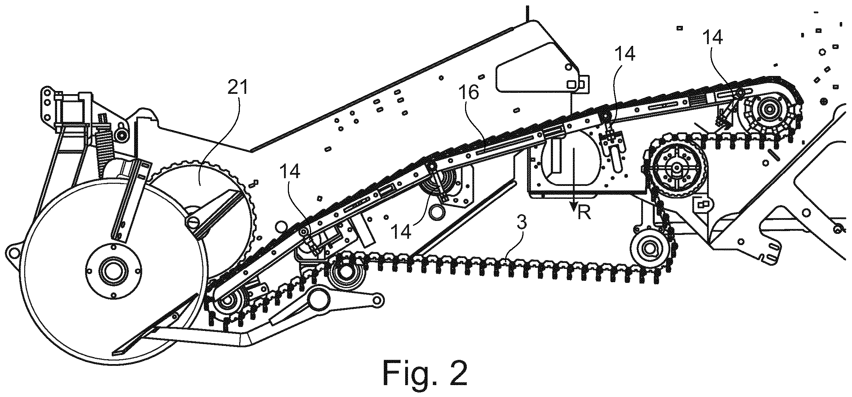

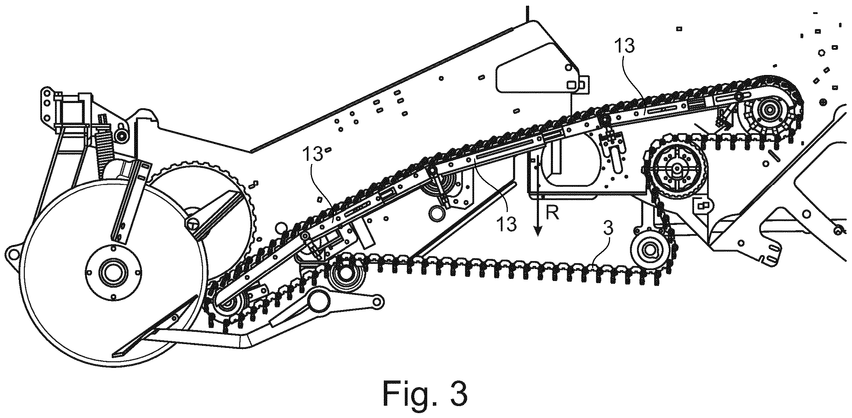

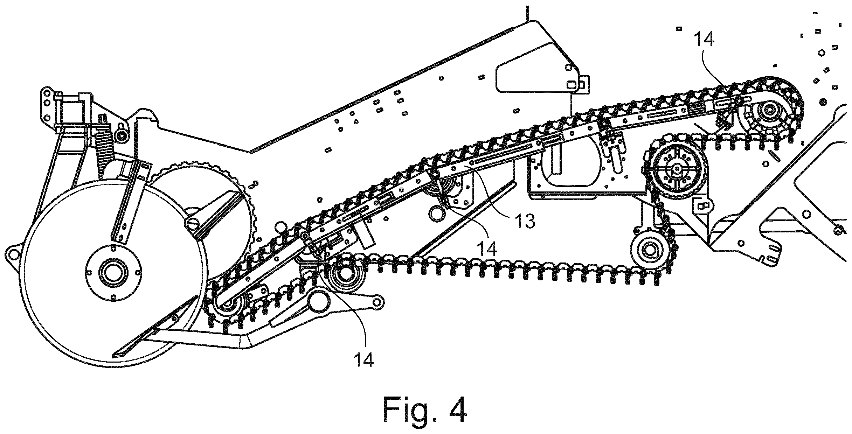

Das Positioniermittel 13 ist als Führungsschiene und mehrteilig ausgebildet, sodass sich analog zu den einzelnen Steigungsabschnitten des Siebbandes 2 Einzelabschnitte von Führungsschienen 13 ergeben. Mit einer Mehrzahl von zugeordneten Stellorganen 14 (Fig. 2) sind die einzelnen Abschnitte bzw. Teile des Positionierelements 13 in die gewünschte Relativposition zum Endlosträger 3 bringbar. Um bei unterschiedlichen Steigungen des Siebbandes im Verlauf der Siebzone S die notwendigen Anpassungen vornehmen zu können, ist das mehrteilige Positionierelement 13 mit einer Reihe von mittels Langlöchern beweglichen Schubverbindungen versehen. Die einzelnen Teile des Positionierelements sind so ineinander geführt und können hierdurch aufeinander zu- bzw. voneinander wegbewegt werden, um die Gesamtlänge des Positionierelements 13 in dem Obertrum bzw. der entsprechenden Siebzone S veränderbar gestalten zu können. In den Figuren 2 bis 4 sind weiterhin übliche Teile einer erfindungsgemäßen Erntemaschine zu erkennen.

In den Figuren 2, 3 und 4 sowie 9, 10 und 11 sind die unterschiedlichen Siebbandteilungen und Abstände A aufgrund unterschiedlicher Relativpositionen des Positionierelements 13 bzw. von Teilen des Positionierelements 13 in Bezug auf den Endlosträger 3 dargestellt. Durch die Beabstandung der in einer Draufsicht zumindest teilweise zwischen den Endlosträgern 3 angeordneten Positionierelemente 13 vom Endlosträger 3 können die einzelnen Klappeneinheiten der Siebstabeinheiten eine andere Winkellage relativ zur Längserstreckung des Endlosträgers 3 bzw. zur jeweiligen Förderrichtung einnehmen. Hierdurch ändert sich der Abstand A einander nachfolgender Siebstäbe 4, 6 unterschiedlicher Siebstabeinheiten.

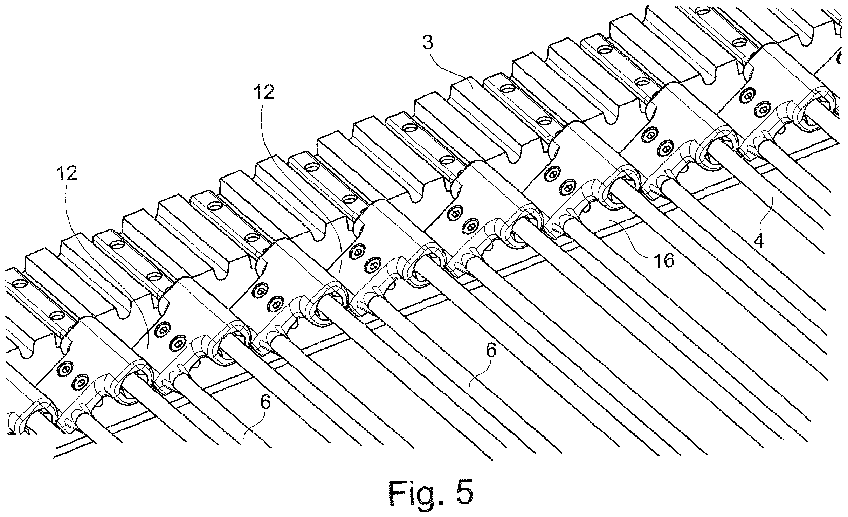

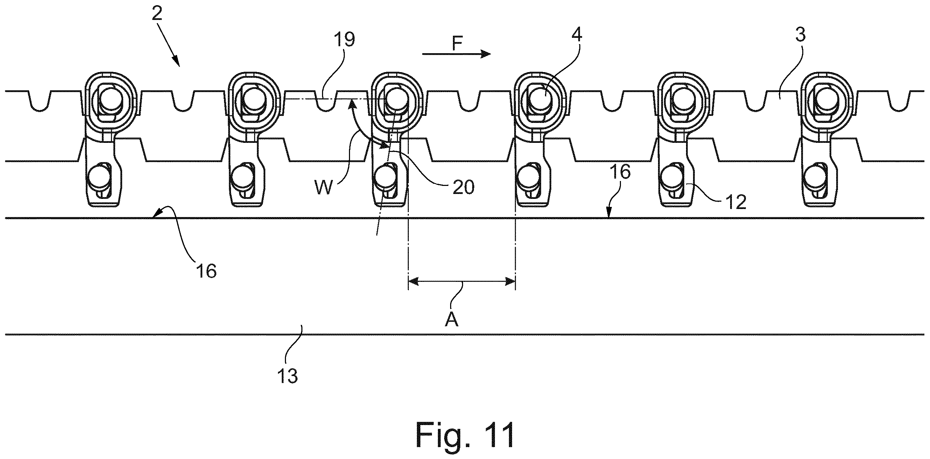

Die links und rechts innenseitig der Endlosträger 3 längs des Siebbandes 2 angeordneten Positioniermittel 13 begrenzen die schwerkraftbedingte Verschwenkung bzw. Drehung der beweglichen Teile der Siebstabeinheiten 11 bzw. der Klappeneinheiten solange, bis die Öffnung wie vorbeschrieben bei horizontalen Verläufen des Siebbandes 2 aufgrund mangelnder Anlage auf dem Auflager maximal wird (Fig. 11). Zur Begrenzung der schwerkraftbedingten Verschwenkung oder Drehung der Klappeneinheiten ist das Positioniermittel 13 in der Siebzone mit einer Führungsfläche 16 versehen, auf der in der Darstellung der Fig. 5 die nicht näher erkennbaren Unterseiten der Gelenkteile 12 der Klappeneinheiten, umfassend Siebstäbe 6 und das Gelenkteil 12 aufliegen. Die Oberfläche 16 ist zur Verringerung der Reibung mit den Unterseiten der Klappeneinheiten mit einem Kunststoffüberzug versehen. Während des Betriebs der erfindungsgemäßen Siebbandeinheit wird durch das Überziehen bzw. Gleiten der Klappeneinheiten entlang der Führungsfläche diese von von dem Obertrum herunterfallenden Beimengen gesäubert.

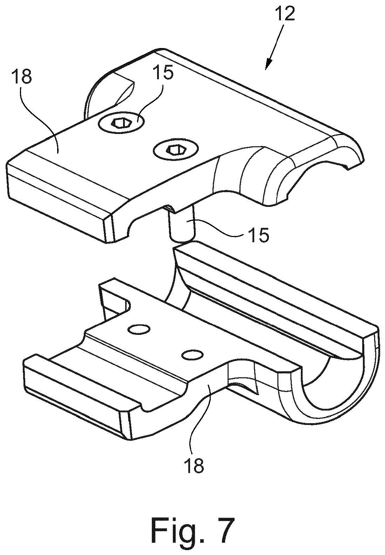

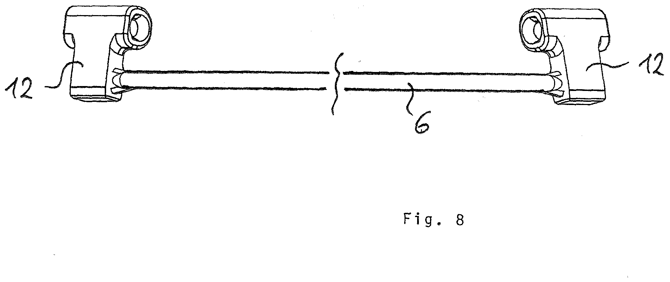

Die erfindungsgemäßen Klappeneinheiten können gemäß Fig. 8 an beiden Enden Gelenkteile 12 aufweisen, die durch den gebrochen dargestellten Siebstab 6 verbunden sind. Die Siebstäbe 4 einer jeweiligen Siebstabeinheit 11 sind an dem Endlosträger festgelegt, sodass über das zwischen Siebstab 4 und Siebstab 6 ausgebildete Gelenk der Siebstab 6 lageveränderlich zum Endlosträger 3 festgelegt ist (vgl. Fig. 5 und 6). Zu Wartungswecken ist ein Gelenkteil 12 vorzugsweise mit zwei Schalenhälften 18 ausgebildet (Fig. 7), die über Befestigungsmittel 15 miteinander verbunden sind. Entsprechend schnell kann eine fehlerhafte oder schadhafte bzw. verschlissene Klappeneinheit ersetzt werden.

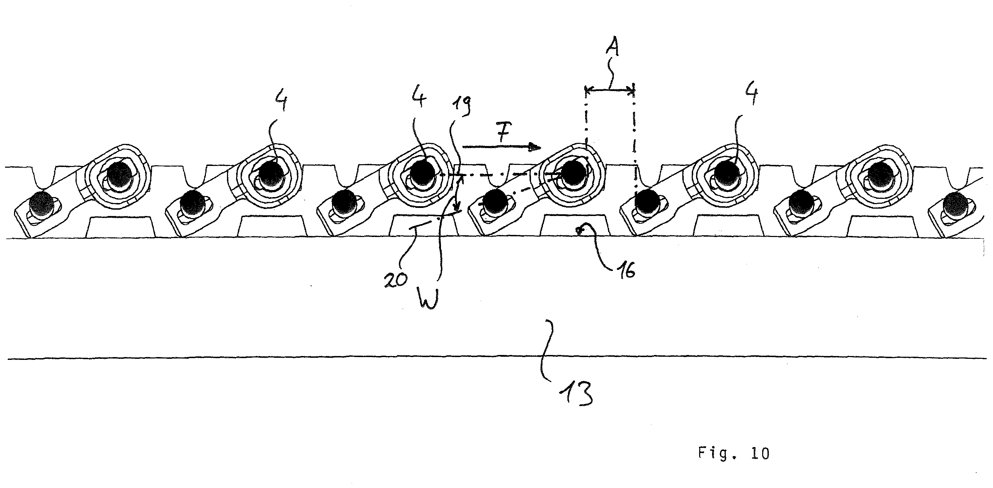

Die Winkellage der Klappeneinheit bzw. der Siebstabeinheit ist wie in den Fig. 9, 10 und 11 gezeigt in der Siebzone S durch den Abstand des Positioniermittels 13 und insbesondere dessen Führungsfläche 16 von dem Siebbandträger 3 beschränkt. In der maximal dichten Position nach Fig. 9 ist ein Winkel W zwischen einer parallel zur Förderrichtung F und mithin zum Endlosträger 3 ausgebildeten Geraden 19 und einer durch die Längserstreckung einer Klappeneinheit gebildeten Geraden 20 nahezu 0 (Fig. 9). Durch die Beabstandung des Positioniermittels 13 von dem Endlosträger bzw. der Drehachse der feststehenden Siebstäbe 4 können die Klappeneinheiten schwerkraftbedingt und gegebenenfalls belastet durch zu siebendes Gemisch zu einem größeren Winkel W aufklappen und liegen weiterhin auf der Führungsfläche 16 an (Fig. 10). Die stärkere Beabstandung des Positioniermittels 13 von der Drehachse des jeweiligen feststehenden Siebstabs einer jeweiligen Klappeneinheit führt bei der in der Fig. 11 dargestellten horizontalen Ausrichtung des Siebbandes 2 dazu, dass die Gelenkteile 12 nicht mehr auf der Führungsfläche 16 aufliegen und die Klappenteile maximal aufgeschwenkt sind. Der hierfür eingenommene Winkel W liegt je nach Symmetrie der Klappeneinheit nahezu bei 90°, zumindest jedoch bevorzugt zwischen 80° und 100°. Um im Bereich der Umlenkung der Endlosträger 3 bzw. des Siebbandes 2 ein schwerkraftbedingtes Überschlagen der Klappeneinheiten zu vermeiden, kann eine herkömmlicherweise als Krauteinzugsrolle ausgebildete Führungseinheit 21 verwendete Rolle, die vorzugsweise breiter als der Endlosträger ausgebildet ist, in dem Umlenkbereich vorhanden sein (Fig. 2).

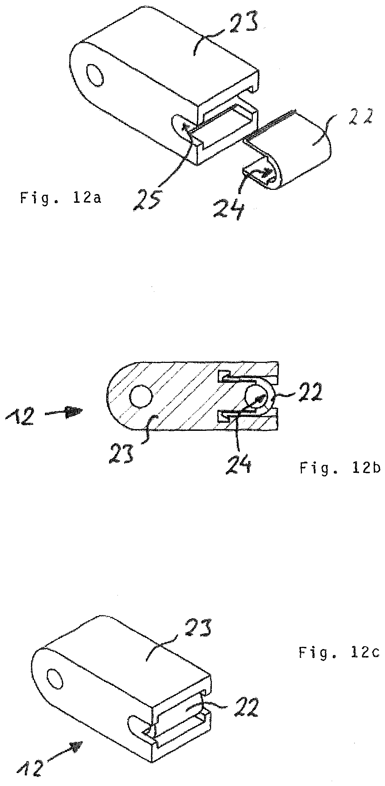

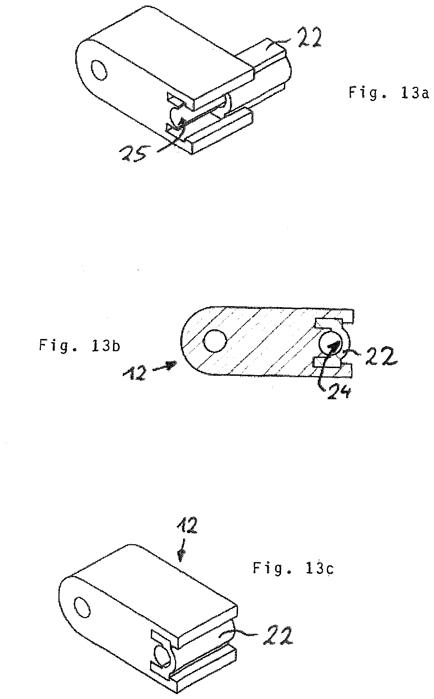

Eine zur Klappeneinheit nach Fig. 6 alternative, erfindungsgemäße Klappeneinheit weist ein Gelenkteil 12 auf, welches zur schwenkbaren Festlegung des Gelenkteils insbesondere an einem fest mit einem Endlosträger verbundenen Siebstab ein Schub- und/oder Rastelement 22 aufweist, über das die Befestigung und Demontage einer Klappeneinheit möglichst einfach und schnell erfolgt (Fig. 12 a-c). Anstelle der Schraubverbindungen des Gelenkteils 12 nach Fig. 6 ist dieses Gelenkteil wie auch das Gelenkteil nach den Fig. 13 a-c mit einem Rast- und/oder Schubelement versehen, welches entweder stirnseitig (Fig. 12 a) oder seitlich (Fig. 13 a) in einen Hauptteil 23 des Gelenkteils eingeschoben wird und dort über Hinterschneidungen 24 verrastet (Fig. 12 b) bzw. gesichert ist (Fig. 13 b).

Das jeweilige Rast- und/oder Schubelement 22 ist im Bereich der Anlage an einen Siebstab vorzugsweise aus einem härteren Material als der Rest des Gelenkteils 12, so dass das Rast- und/oder Schubelement 22 die wesentlichen, auf die Klappeneinheit einwirkenden Kräfte aufnimmt und an den in der Regel feststehenden Siebstab weitergibt, an dem die Klappeneinheit angeordnet ist.

Das Rast- und/oder Schubelement 22 bildet für den vorzugsweise feststehenden Siebstab gemeinsam mit dem Rest des Gelenkteils 12 einen im Querschnitt nach Fig. 12 b bzw. Fig. 13 b erkennbaren runden Lagersitz aus. Hierfür sind die Rast- und/oder Schubelemente 22 der Ausführungsbeispiele der Fig. 12 und 13 mit einer im Querschnitt halbschalenförmigen Aufnahme 24 versehen, deren Innenoberfläche mit einer entsprechend geformten Aufnahme 25 des Hauptteils 23 gemeinsam den Lagersitz für den jeweiligen Siebstab ausbildet.

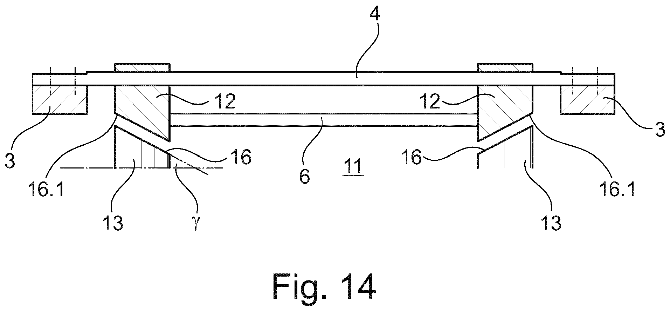

In einem weiteren erfindungsgemäßen Ausführungsbeispiel einer Siebbandeinheit ist diese mit zwei Führungsflächen 16 versehen, die im Querschnitt der Fig. 14 und in Förderrichtung betrachtet zu einem Untergrund mit einem Winkel γ angewinkelt und zur Mitte M der Siebbandeinheit hin abfallend ausgebildet sind. Hierdurch können sich auf den Führungsflächen weniger ungewünschte Beimengen in Form von Erde oder Kluten ablagern, gleichzeitig wird die Klappeneinheit mit den entsprechend angepassten und mit komplementär schräg gestellten Gelenkteilführungsflächen 16.1 auf der Außenoberfläche der Gelenkteile 12 zentriert.

## Patentansprüche

1. Siebbandeinheit für eine Erntemaschine, insbesondere für einen Hackfruchternter, zum Absieben von Beimengen eines Gemisches aus Erntegut und Beimengen, umfassend ein Siebband (2) mit wenigstens zwei vorzugsweise als Trägerriemen oder -ketten ausgebildeten Endlosträgern (3), zwischen denen in Richtung quer zur Förderrichtung Siebstäbe angeordnet sind, die eine Mehrzahl von insbesondere jeweils zumindest zwei Siebstäbe (4, 6) umfassende Siebstabeinheiten (11) ausbilden, wobei zumindest ein Teil der Siebstäbe relativ zu den Endlosträgern (3) beweglich festgelegt ist, wobei die Siebbandeinheit (1) ein wenigstens abschnittsweise längs des Siebbandes (2) angeordnetes und auf die beweglichen Siebstäbe (6) einwirkendes Positioniermittel (13) aufweist, über das in der Siebzone S in Siebrichtung betrachtet ein Abstand A in Förderrichtung F nachfolgender Siebstäbe definiert und variabel einstellbar ist, **dadurch gekennzeichnet, dass** jede Siebstabeinheit (11) wenigstens eine Klappeneinheit mit zumindest einem der zwei Siebstäbe (4,6) aufweist, die Klappeneinheit über wenigstens ein mit dem Endlosträger (3) verbundenes Gelenk schwenk- oder drehbar ist, und das Positioniermittel (13) zur Beeinflussung einer Winkellage der Klappeneinheit ausgebildet ist, und wobei zumindest ein Stellorgan (14) dem Positioniermittel (13) zugeordnet ist, über das der Abstand zumindest eines die Klappeneinheit führenden Teils des Positioniermittels (13) zum Endlosträger (3) einstellbar ist.

2. Siebbandeinheit nach Anspruch 1, **dadurch gekennzeichnet, dass** zumindest ein Teil der Siebstabeinheit (11) durch das Positioniermittel (13) lageveränderbar zum Endlosträger (3) ausgebildet ist.

3. Siebbandeinheit nach einem der vorherigen Ansprüche, **dadurch gekennzeichnet, dass** die Siebstabeinheit (11) einen im Querschnitt exzentrisch gelagerten Siebstab aufweist.

4. Siebbandeinheit nach Anspruch einem der vorherigen Ansprüche, **dadurch gekennzeichnet, dass** das Positioniermittel (13) zur Begrenzung einer insbesondere schwerkraftbedingten Verschwenkung oder Drehung der Klappeneinheiten ausgebildet ist.

5. Siebbandeinheit nach einem der vorherigen Ansprüche, **dadurch gekennzeichnet, dass** das Positioniermittel (13) in der Siebzone S wenigstens eine Führungsfläche (16) zur Anlage der Klappeneinheiten aufweist.

6. Siebbandeinheit nach Anspruch 5, **dadurch gekennzeichnet, dass** die Führungsfläche (16) in Förderrichtung betrachtet zu einem Untergrund angewinkelt und insbesondere zur Mitte (M) der Siebbandeinheit hin abfallend ausgebildet ist.

7. Siebbandeinheit nach Anspruch 5 oder 6, **dadurch gekennzeichnet, dass** die Führungsfläche (16) senkrecht zur Förderrichtung betrachtet neben und insbesondere zwischen den Endlosträgern (3) angeordnet ist.

8. Siebbandeinheit nach einem der Ansprüche 5 bis 7, **dadurch gekennzeichnet, dass** die Führungsfläche (16) zur Erzeugung eines punktuell variierbaren Abstands A mit einer Profilierung versehen ist.

9. Siebbandeinheit nach einem der vorherigen Ansprüche, **dadurch gekennzeichnet, dass** das Positioniermittel (13) in der Siebzone mehrteilig ausgebildet ist.

10. Siebbandeinheit nach einem der vorherigen Ansprüche, **dadurch gekennzeichnet, dass** die Siebstäbe (4,6) einer Siebstabeinheit (11) einen zumindest im Wesentlichen festen Abstand zueinander aufweisen.

11. Siebbandeinheit nach einem der vorherigen Ansprüche, **dadurch gekennzeichnet, dass** ein Siebstab (4) einer jeweiligen Siebstabeinheit (11) an den Endlosträgern (3) festgelegt ist und einen Teil von zwei Gelenken zur Anbindung der Klappeneinheit ausbildet.

12. Siebbandeinheit nach einem der vorherigen Ansprüche, **dadurch gekennzeichnet, dass** das Positioniermittel (13) mitlaufend ausgebildet ist.

13. Siebbandeinheit nach einem der vorherigen Ansprüche, **dadurch gekennzeichnet, dass** wenigstens 25%, vorzugsweise 50% und insbesondere bis zu 75% der Siebstäbe (6) relativ zum Endlosträger (3) lageveränderbar ausgebildet sind.

14. Siebbandeinheit nach einem der vorherigen Ansprüche **gekennzeichnet durch** eine insbesondere fliehkraftbedingte Lageveränderung begrenzende Führungseinheit (21).

15. Erntemaschine, **gekennzeichnet durch** eine Siebbandeinheit nach einem der Ansprüche 1 bis 14.

16. Erntemaschine nach Anspruch 15, **dadurch gekennzeichnet, dass** die Erntemaschine einen Sensor zur Erkennung der Neigung des Bodens sowie eine zugehörige Auswerte- und Steuervorrichtung aufweist, wobei die Erntemaschine mit ihrer Auswertevorrichtung zur Steuerung des Positioniermittels in Abhängigkeit der Bodenneigung ausgebildet ist.

## Claims

1. Sieve belt unit for a harvesting machine, in particular for a root crop harvester for sieving off admixtures of a mixture of crop and admixtures, comprising a sieve belt (2) with at least two endless carriers (3), preferably in the form of carrier belts or chains, between which sieve bars are arranged transversely to the conveying direction, which form a plurality of sieve bar units (11), in particular each comprising at least two sieve bars (4, 6), at least some of the sieve bars being movably fixed relative to the endless carriers (3), wherein the sieve belt unit (1) has a positioning means (13) which is arranged at least in sections along the sieve belt (2) and acts on the movable sieve bars (6) and by means of which a spacing A in the conveying direction F of subsequent sieve bars is defined and variably adjustable in the sieving zone S as viewed in the sieving direction, **characterized in that** each sieve bar unit (11) has at least one flap unit with at least one of the two sieve bars (4, 6), the flap unit is pivotable or rotatable by means of at least one joint connected to the endless carrier (3), and the positioning means (13) is designed for affecting an angular position of the flap unit, and wherein at least one actuator (14) is associated with the positioning means (13), by means of which the distance of at least one part of the positioning means (13) guiding the flap unit from the endless carrier (3) can be adjusted.

2. Sieve belt unit according to claim 2, **characterized in that** at least one part of the sieve bar unit (11) is designed so that its position relative to the endless carrier (3) can be changed by the positioning means (13).

3. Sieve belt unit according to one of the preceding claims, **characterized in that** the sieve bar unit (11) has a sieve bar which is mounted eccentrically in cross-section.

4. Sieve belt unit according to claim one of the preceding claims, **characterized in that** the positioning means (13) is designed to limit a particularly gravity-induced pivoting or rotation of the flap units.

5. Sieve belt unit according to one of the preceding claims, **characterized in that** the positioning means (13) has at least one guide surface (16) in the sieving zone S for abutment of the flap units.

6. Sieve belt unit according to claim 5, **characterized in that** the guide surface (16), viewed in the conveying direction, is angled towards a subsurface and in particular slopes down towards the center (M) of the sieve belt unit.

7. Sieve belt unit according to claim 5 or 6, **characterized in that** the guide surface (16) is arranged next to and in particular between the endless carriers (3) when viewed perpendicular to the conveying direction.

8. Sieve belt unit according to one of claims 5 to 7, **characterized in that** the guide surface (16) is provided with a profiling to produce a selectively variable distance A.

9. Sieve belt unit according to one of the preceding claims, **characterized in that** the positioning means (13) in the sieving zone is formed in several parts.

10. Sieve belt unit according to one of the preceding claims, **characterized in that** the sieve bars (4, 6) of a sieve bar unit (11) have an at least substantially fixed spacing from one another.

11. Sieve belt unit according to one of the preceding claims, **characterized in that** a sieve bar (4) of a respective sieve bar unit (11) is fixed to the endless carriers (3) and forms part of two joints for connecting the flap unit.

12. Sieve belt unit according to one of the preceding claims, **characterized in that** the positioning means (13) is designed to move with the sieve belt.

13. Sieve belt unit according to one of the preceding claims, **characterized in that** at least 25%, preferably 50% and in particular up to 75% of the sieve bars (6) are designed to be adjustable in position relative to the endless carrier (3).

14. Sieve belt unit according to one of the preceding claims, **characterized by** a guide unit (21) limiting the change in position particularly induced by centrifugal force.

15. Harvesting machine, **characterized by** a sieve belt unit according to one of claims 1 to 14.

16. Harvesting machine according to claim 15, **characterized in that** the harvesting machine has a sensor for detecting the inclination of the ground and an associated evaluation and control device, the harvesting machine with its evaluation device being designed to control the positioning means as a function of the ground inclination.

## Revendications

1. Unité à bande de tamisage pour une machine de récolte, en particulier pour une récolteuse de plantes-racines, permettant le tamisage de matières étrangères d'un mélange de produits à récolter et de matières étrangères, comprenant une bande de tamisage (2) avec au moins deux supports sans fin (3) réalisés de préférence sous forme de courroies ou de chaînes de support, entre lesquels sont agencées des barres de tamisage dans la direction transversale à la direction de transport, qui forment une pluralité d'unités (11) à barres de tamisage comprenant en particulier chacune au moins deux barres de tamisage (4, 6), au moins une partie des barres de tamisage étant fixée de manière mobile par rapport aux supports sans fin (3), l'unité (1) à bande de tamisage présentant un moyen de positionnement (13) agencé au moins par sections le long de la bande de tamisage (2) et agissant sur les barres de tamisage mobiles (6), par l'intermédiaire duquel, dans la zone de tamisage S, vue dans la direction de tamisage, une distance A dans la direction de transport F de barres de tamisage consécutives est définie et est apte à être réglée de manière variable, **caractérisée en ce que** chaque unité (11) à barres de tamisage présente au moins une unité à volet avec au moins l'une des deux barres de tamisage (4, 6), l'unité à volet est apte à pivoter ou à tourner par l'intermédiaire d'au moins une articulation reliée au support sans fin (3), et le moyen de positionnement (13) est conçu de façon à influencer une position angulaire de l'unité à volet, au moins un organe de réglage (14) étant associé au moyen de positionnement (13), par lequel la distance entre au moins une partie du moyen de positionnement (13) guidant l'unité à volet et le support sans fin (3) est apte à être réglée.

2. Unité à bande de tamisage selon la revendication 1, **caractérisée en ce qu'**au moins une partie de l'unité (11) à barres de tamisage est conçue de manière à pouvoir changer de position par rapport au support sans fin (3) grâce au moyen de positionnement (13).

3. Unité de tamisage selon l'une des revendications précédentes, **caractérisée en ce que** l'unité (11) à bande de tamisage présente une barre de tamisage montée, en section transversale, de manière excentrée.

4. Unité à bande de tamisage selon l'une des revendications précédentes, **caractérisée en ce que** le moyen de positionnement (13) est conçu de façon à limiter un pivotement ou une rotation des unités à volets, notamment sous l'effet de la gravité.

5. Unité à bande de tamisage selon l'une des revendications précédentes, **caractérisée en ce que** le moyen de positionnement (13) présente, dans la zone de tamisage S, au moins une surface de guidage (16) pour l'appui des unités à volets.

6. Unité à bande de tamisage selon la revendication 5, **caractérisée en ce que** la surface de guidage (16), vue dans la direction de transport, est inclinée par rapport à un support et est notamment inclinée vers le centre (M) de l'unité à bande de tamisage.

7. Unité à bande de tamisage selon la revendication 5 ou la revendication 6, **caractérisée en ce que** la surface de guidage (16), vue perpendiculairement à la direction de transport, est agencée à côté de, et en particulier entre, les supports sans fin (3).

8. Unité à bande de tamisage selon l'une des revendications 5 à 7, **caractérisée en ce que** la surface de guidage (16) est pourvue d'un profilage pour générer une distance A variable en certains points.

9. Unité à bande de tamisage selon l'une des revendications précédentes, **caractérisée en ce que** le moyen de positionnement (13) est réalisé en plusieurs parties dans la zone de tamisage.

10. Unité à bande de tamisage selon l'une des revendications précédentes, **caractérisée en ce que** les barres de tamisage (4, 6) d'une unité (11) à barres de tamisage présentent un écart au moins essentiellement fixe entre elles.

11. Unité de tamisage selon l'une des revendications précédentes, **caractérisée en ce qu'**une barre de tamisage (4) d'une unité (11) à bande de tamisage respective est fixée sur les supports sans fin (3) et forme une partie de deux articulations pour la liaison de l'unité à volet.

12. Unité à bande de tamisage selon l'une des revendications précédentes, **caractérisée en ce que** le moyen de positionnement (13) est conçu de façon à suivre le mouvement.

13. Unité à bande de tamisage selon l'une des revendications précédentes, **caractérisée en ce qu'**au moins 25%, de préférence 50%, et en particulier jusqu'à 75%, des barres de tamisage (6) sont réalisées de manière à pouvoir changer de position par rapport au support sans fin (3).

14. Unité à bande de tamisage selon l'une des revendications précédentes, **caractérisée par** une unité de guidage (21) limitant le changement de position, en particulier en raison de la force centrifuge.

15. Machine de récolte, **caractérisée par** une unité à bande de tamisage selon l'une des revendications 1 à 14.

16. Machine de récolte selon la revendication 15, **caractérisée en ce que** la machine de récolte comporte un capteur pour détecter l'inclinaison du sol ainsi qu'un dispositif d'évaluation et de commande associé, la machine de récolte étant conçue avec son dispositif d'évaluation de façon à commander le moyen de positionnement en fonction de l'inclinaison du sol.
